# FASCICULE DE BREVET EUROPEEN

(11) **EP 3 794 217 B1**
(45) Date de publication et mention de la délivrance du brevet: **27.04.2022**
(21) Numéro de dépôt: 19732409.8
(22) Date de dépôt: 13.05.2019
(51) Int. Cl.: F01D 5/14, F01D 9/02, F01D 9/04, F01D 11/00

(54) **ELEMENT DE STATOR DE TURBOMACHINE**
TURBOMASCHINENSTATORELEMENT
TURBOMACHINE STATOR ELEMENT

(30) Priorité: 17.05.2018 FR 1854134
(43) Date de publication de la demande: 24.03.2021
(73) Titulaire: SAFRAN AIRCRAFT ENGINES, 75015 Paris (FR)
(72) Inventeur: GERMAIN, Alexis, Maxime, 77550 MOISSY-CRAMAYEL (FR); PERROLLAZ, Jean-Marc, Claude, 77550 MOISSY-CRAMAYEL (FR); ANTON, Pierre, Grégoire, 77550 MOISSY-CRAMAYEL (FR)
(74) Mandataire: Gevers & Orès
(86) Numéro de dépôt international: PCT/FR2019/051068
(87) Numéro de publication internationale: WO 2019/220042

(56) Documents cités:
- WO-A1-2015/092306
- JP-A- S6 022 002
- JP-A- S56 162 205

## Description

### DOMAINE TECHNIQUE

La présente invention concerne le domaine des turbomachines, et en particulier les turbomachines à double flux dans lesquelles circulent des flux d'air d'amont en aval. Elle vise plus précisément, mais non exclusivement, un élément de stator de turbomachine comprenant des aubes de stator.

### ETAT DE L'ART

Il est connu des turbomachines double flux comportant une soufflante mobile disposée en amont d'un générateur de gaz selon la circulation des gaz dans la turbomachine. Le générateur de gaz est logé dans un carter intérieur annulaire tandis que la soufflante est logée dans un carter extérieur annulaire. Ces carters intérieur et extérieur sont séparés par un carter inter-veine annulaire, de manière à délimiter une veine primaire et une veine secondaire. La soufflante comprend des aubes de soufflante dont l'extrémité libre est en regard du carter extérieur, de manière à comprimer un flux d'air incident au moins dans la veine secondaire, et de préférence également dans la veine primaire. La turbomachine est dite à soufflante carénée. Le flux d'air circulant dans la veine primaire est classiquement comprimé par des étages de compresseur de la turbomachine avant d'entrer dans la chambre de combustion. L'énergie de combustion est récupérée par des étages de turbine qui participent à l'entraînement des étages de compresseur et de la soufflante. Le flux d"air circulant dans la veine secondaire participe pour sa part à la poussée de la turbomachine.

De manière classique, la veine secondaire comporte, en aval de la soufflante, des aubes de stator connues sous le terme de redresseurs ou d'aubes de guidage de sortie, désignées en langue anglaise par le terme « Outlet Guide Vanes » (siglée OGV). Ces aubes de stator sont disposées radialement depuis la surface externe du carter inter-veine, en aval des aubes de soufflante, et permettent de redresser le flux généré et dévié par cette dernière au cours de sa rotation. Le redressement du flux permet l'augmentation de la pression statique en réduisant la vitesse de l'écoulement dans le repère fixe, mais s'accompagne d'une perte de pression totale. Les aubes de stator sont conçues de manière à minimiser ces pertes qui dégradent leurs comportements. Cependant, il existe également des pertes par frottement et des pertes causées par un tourbillon de passage. Le tourbillon de passage est généré du fait de la présence d'une paroi au niveau du pied de chaque aube. Ces tourbillons de passage prennent une forme sensiblement de fer à cheval et se répartissent à l'intrados et à l'extrados des aubes. A son entrée dans un passage formé entre deux aubes adjacentes, le tourbillon de passage migre de l'intrados d'une aube vers l'extrados de l'aube adjacente. Lorsque le tourbillon heurte l'extrados de l'aube, celui-ci peut donner naissance à un décollement aérodynamique.

Une solution pour réduire la présence de ce tourbillon entre deux aubes adjacentes consiste à déposer plusieurs ailettes (ou « fin » en langue anglaise) entre les aubes. Un exemple d'ailettes est décrit dans le document WO 2015/092306 où celles-ci sont agencées entre des aubes de compresseur. Cependant, il s'agit là d'une simple modélisation utilisant des calculs aérodynamiques et qui n'intègre pas les contraintes de fabrication et d'implantation des ailettes entre les aubes.

La présente invention vise à remédier à ces inconvénients, en proposant un élément de stator de turbomachine dans lequel sont réduits les écoulements secondaires (tourbillon de coin, tourbillon de passage), de manière à garantir les performances aérodynamiques de la turbomachine.

### EXPOSE DE L'INVENTION

L'invention a ainsi pour objet un élément de stator de turbomachine, s'étendant autour d'un axe longitudinal, l'élément comprenant au moins une première aube de stator et au moins et une deuxième aube de stator adjacente circonférentiellement à la première aube de stator, chaque première et deuxième aube de stator comprenant une plateforme et une pale s'étendant radialement depuis la plateforme, l'élément de stator comprenant également au moins un joint inter-plateforme, disposé entre la plateforme de la première aube de stator et la plateforme de la deuxième aube de stator.

Dans l'ensemble selon l'invention, le joint inter-plateforme comprend un support plan muni d'une surface supérieure sur laquelle s'étend une ailette.

Ainsi, grâce à l'intégration de l'ailette au joint inter-plateforme, on forme une pièce unique qui permet de s'affranchir des problèmes d'interface et de tenue mécanique entre l'ailette et le joint inter-plateforme. L'ailette permet de guider les écoulements et d'empêcher les lignes de courant de remonter sur l'extrados des aubes de stator.

La plateforme et la pale sont monoblocs.

La première et la deuxième aube de stator sont de préférence identiques.

L'ailette est avantageusement allongée selon une direction sensiblement parallèle à l'axe longitudinal.

L'ailette peut présenter la même courbure que l'aube de stator dont l'extrados est située du côté de l'ailette.

Le support du joint inter-plateforme peut comprendre deux parties longitudinales adjacentes, chaque partie épousant le contour de la moitié d'une plateforme d'une aube adjacente.

Le bord d'attaque de l'ailette peut être situé longitudinalement à une position comprise entre 0% et 25% de la corde reliant le bord d'attaque d'une aube de stator au bord de fuite de l'aube.

La longueur de la corde de l'ailette peut être comprise entre 75% et 100% de la longueur de la corde d'une aube de stator.

L'épaisseur maximale de l'ailette peut être comprise entre 0.5 et 0.7 fois l'épaisseur maximale d'une aube de stator.

La distance entre l'ailette et une aube adjacente à l'ailette peut être comprise entre 30% et 70% de la distance entre les deux aubes adjacentes.

L'ailette peut comprendre en coupe transversale un sommet de forme arrondie.

La zone de raccordement entre le bord de fuite et/ou le bord d'attaque de l'ailette et le sommet peut être de section longitudinale courbe.

La zone de raccordement entre la partie inférieure de l'ailette et la surface supérieure du support plan du joint peut présenter une section transversale courbe.

La hauteur radiale de l'ailette peut être comprise entre 3% et 5% de la hauteur radiale maximale d'une veine annulaire secondaire de turbomachine dans laquelle est disposée les aubes de stator.

L'élément de stator de la turbomachine selon l'invention peut comprendre une ou plusieurs caractéristiques suivantes, prises isolément les unes des autres ou en comparaison les unes avec les autres :
- le support plan présente une longueur supérieure à celle de la plateforme de l'aube de stator ;
- chaque partie longitudinale du support comprend une portion longitudinale et deux portions transversales ;
- l'ailette est portée par au moins une partie d'une portion longitudinale de chaque partie longitudinale du support ;
- chaque portion longitudinale du support enveloppe une bordure longitudinale de la plateforme et chaque portion transversale enveloppe une moitié d'une bordure transversale de ladite plateforme ;
- le bord d'attaque de l'ailette est disposé sur une première partie longitudinale du support qui est agencée d'un côté extrados de l'aube, le bord de fuite de l'ailette est disposé sur une seconde partie longitudinale du support et éloignée de ladite première partie longitudinale ;
- la zone de raccordement entre le bord d'attaque et son sommet présente un rayon de courbure inférieur à celui de la zone de raccordement entre le bord de fuite et son sommet ;
- le joint inter-plateforme comprend des fixations disposées sur une extension radiale de la partie longitudinale du support.

L'invention a également pour objet une turbomachine comprenant au moins un élément de stator.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 représente schématiquement une turbomachine avec une soufflante en amont d'un générateur de gaz et à laquelle s'applique l'invention,
- la figure 2 est une vue en perspective d'un exemple d'aube de stator à laquelle peut s'appliquer l'invention,
- la figure 3 est une vue partielle en perspective d'un élément de stator de l'état de la technique,
- la figure 4 est une vue en perspective d'un élément de stator de l'état de la technique,
- la figure 5 est une vue en perspective d'un élément de stator selon l'invention,
- la figure 6 est une vue en perspective d'un joint inter-plateforme utilisé dans l'élément de stator selon l'invention,
- la figure 7 est un diagramme illustrant schématiquement deux configurations du joint inter-plateforme dans l'élément de stator,
- les figures 8 et 9 sont des vues en perspectives des deux configurations du joint inter-plateforme,
- les figures 10 et 11 sont des vues partielles schématiques du joint inter-plateforme, et
- les figures 12 à 14 sont des vues en perspective du joint inter-plateforme, conformément à un mode de réalisation de la fixation du joint.

### DESCRIPTION DETAILLEE

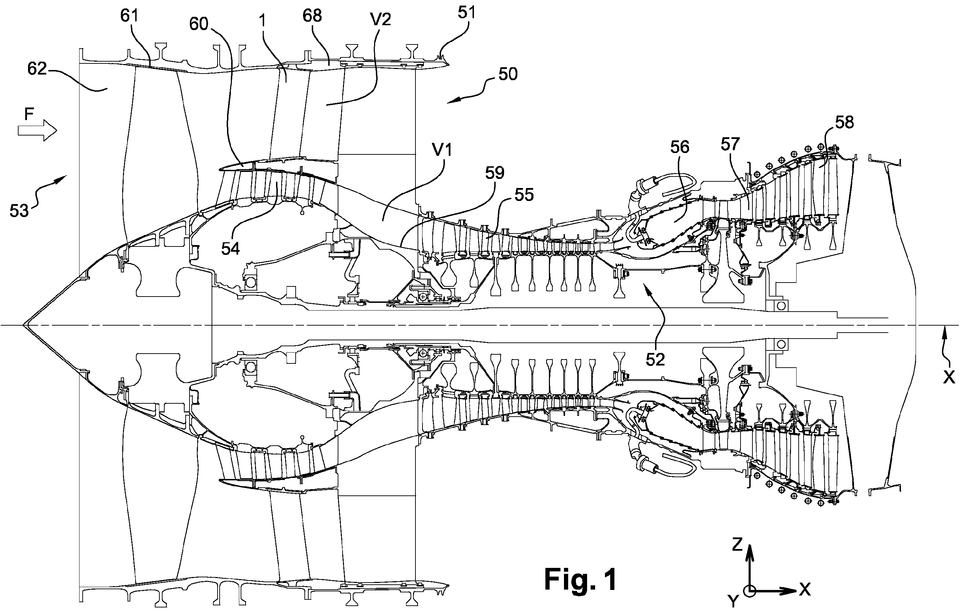

La figure 1 illustre une turbomachine 50 telle qu'un turboréacteur pour aéronef à laquelle s'applique l'invention. Cette turbomachine 50 est ici une turbomachine double flux qui s'étend suivant un axe longitudinal X. La turbomachine 50 comprend de manière générale une nacelle 51 externe entourant un générateur de gaz 52 en amont duquel est montée une soufflante 53. Dans la présente invention, et de manière générale, les termes « amont » et « aval » sont définis par rapport à la circulation des gaz dans la turbomachine. Les termes « supérieur » et « inférieur » sont définis par rapport à un axe radial Z perpendiculaire à l'axe X et au regard de l'éloignement par rapport à l'axe longitudinal X. Un axe transversal Y est également perpendiculaire à l'axe longitudinal X et à l'axe radial Z. Ces axes, X, Y, Z représentés sur la figure 1 forment un repère orthonormé.

Le générateur de gaz 52 comprend dans cet exemple, d'amont en aval, un compresseur basse pression 54, un compresseur haute pression 55, une chambre de combustion 56, une turbine haute pression 57 et une turbine basse pression 58. Le générateur de gaz 52 est logé autour d'un carter interne 59.

La soufflante 53 est ici carénée. Elle est également logée dans la nacelle 51. La soufflante 53 comprime un flux d'air F entrant dans la turbomachine 50 qui se divise en un flux primaire circulant dans une veine primaire V1 annulaire laquelle traverse le générateur de gaz 52 et un flux secondaire circulant dans une veine secondaire V2 annulaire autour du générateur de gaz 52. En particulier, la veine primaire V1 et la veine secondaire V2 sont séparées par un carter inter-veine 60 annulaire disposé entre la nacelle 51 et le carter interne 59. Le flux d'air chaud circulant dans la veine primaire V1 est classiquement comprimé par des étages de compresseur 54, 55 avant d'entrer dans la chambre de combustion 56. L'énergie de combustion est récupérée par des étages de turbine 57, 58 qui assurent l'entraînement des étages de compresseur et de la soufflante. Le flux d'air froid circulant dans la veine secondaire V2 est orienté suivant l'axe longitudinal et participe pour sa part à fournir la majorité de la poussée de la turbomachine.

La nacelle 51 présente une forme générale cylindrique. La nacelle 51 comprend un carter extérieur de soufflante 61 solidaire de celle-ci et entourant une pluralité d'aubes mobiles de soufflante 62 qui sont montées et qui s'étendent radialement depuis un arbre de soufflante en rotation suivant l'axe X par rapport à la nacelle. L'extrémité libre de chaque aube 62 de la soufflante 53 est en regard du carter extérieur de soufflante 61.

Dans la veine secondaire V2 est agencée au moins une aube de stator 1 ou fixe radiale permettant de redresser le flux d'air froid généré par la soufflante 53. Dans la présente invention, on entend par le terme « aube fixe » ou « aube de stator », une aube qui n'est pas entraînée en rotation autour de l'axe X de la turbomachine. En d'autres termes, cette aube de stator est distincte et contraire à une aube mobile ou de rotor de la turbomachine.

Dans le présent exemple, une pluralité d'aubes de stator 1 d'une roue aubagée est agencée transversalement dans la nacelle 51 sensiblement dans un plan transversal à l'axe longitudinal X. A titre d'exemple, des aubes de stator dont le nombre est compris entre dix et cinquante sont nécessaires au redressement du flux d'air froid. Ces aubes de stator 1 sont disposées en aval de la soufflante 53. Celles-ci sont régulièrement réparties autour de l'axe X de la turbomachine 50.

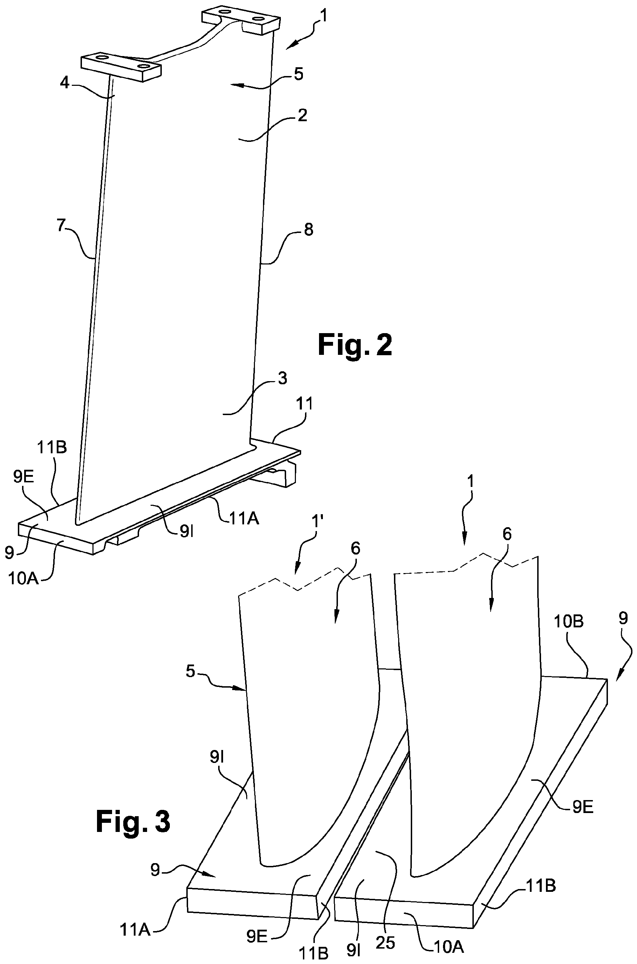

En référence à la figure 2, chaque aube de stator 1 comprend une pale 2 qui est balayée par un flux d'air généré par la soufflante. Cette pale 2 s'étend radialement entre une extrémité de pied 3 et une extrémité de tête 4. La pale 2 comprend également une surface intrados 5 et une surface extrados 6 s'étendant axialement suivant l'axe longitudinal X, entre un bord d'attaque 7 amont et un bord de fuite 8 aval. Les surfaces intrados 5 et extrados 6 sont donc opposées transversalement l'une à l'autre. L'aube de stator comprend également une plateforme 9 depuis laquelle s'étend radialement la pale 2. Les aubes de stator 1 sont avantageusement identiques et sont disposées longitudinalement de la même façon sur toute la périphérie du stator.

La plateforme 9 est solidarisée à la pale 2 au niveau de son extrémité de pied 3. En particulier, la plateforme 9 et la pale 2 sont monoblocs. En d'autres termes, la pale 2 et la plateforme 9 sont formées d'un seul tenant. La plateforme 9 s'étend transversalement de part et d'autre de la pale 2 pour former une portion de plateforme extrados 9E de la pale 2 et une portion de plateforme intrados 9I de la pale 2. La plateforme 9 présente une forme sensiblement parallélépipédique. Plus précisément, la plateforme 9 s'étend axialement entre une première bordure 10A, en amont, et une deuxième bordure 10B opposée, en aval. La plateforme 9 s'étend également entre deux bords longitudinaux 11A, 11B, latéraux et opposés transversalement. Elle peut être d'épaisseur constante.

Sur la figure 3 est illustré en partie un ensemble de deux pièces comprenant deux pales adjacentes, ici suivant l'axe transversal, s'étendant depuis une plateforme. En particulier, une première aube de stator 1 et une deuxième aube de stator 1' sont adjacentes. Chaque première et deuxième aube de stator 1' comprend une pale et une plateforme intégrée.

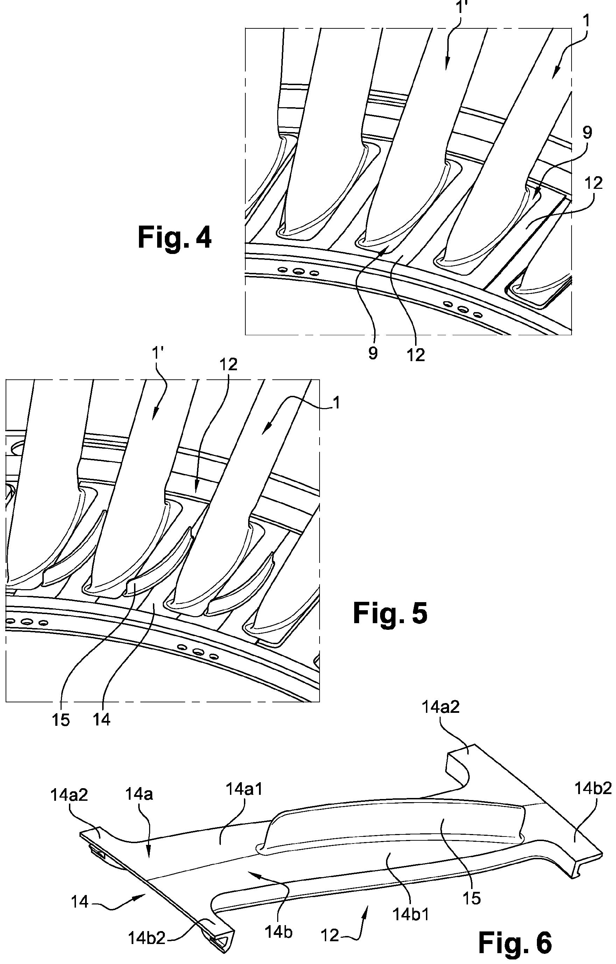

Tel qu'illustré à la figure 4, où l'on retrouve l'ensemble 1, 1' parmi une pluralité de pièces adjacentes de l'état de la technique, chaque aube de stator 1, 1' est entourée au niveau de sa plateforme 9 d'un joint inter-plateforme 12. Ainsi, deux aubes adjacentes 1, 1' sont en contact au niveau de leur joint inter-plateforme 12. Chaque aube 1, 1' est fixée au carter inter-veine 60 et à la nacelle 51 de manière à permettre la reprise des efforts et assurer un rôle structural. L'extrémité de tête 4 de l'aube de stator est reliée à une virole 68 de la nacelle 51 (figure 1). La plateforme 9 et le joint 12 permettent de créer une partie de la peau interne de la veine secondaire V2.

Chaque aube de stator 1, 1' est réalisée dans un matériau métallique ou composite. Dans un exemple de réalisation de la pale, celle-ci présente un évidement central traversant la pale de part et d'autre suivant l'axe transversal Y. L'évidement central est comblé par une pièce rapportée. Cette dernière peut être réalisée dans un matériau composite et être solidarisée à la pale métallique.

Conformément à l'invention, chaque joint inter-plateforme 12 comprend un support plan 14 muni d'une surface supérieure sur laquelle est disposée une ailette 15 (figure 5). L'ailette 15 est allongée suivant une direction sensiblement parallèle à l'axe longitudinal X. En particulier, l'ailette 15 épouse sensiblement le contour des aubes 1 qui lui sont adjacentes. Une possibilité de répartition transversale (azimutale) est que l'ailette 15 présente la même courbure que l'aube 1 adjacente dont l'extrados est située du côté de l'ailette 15. L'ailette 15 s'étend entre la première bordure 10A et la deuxième bordure 10B des parties de plateforme intrados et extrados des aubes 1.

Tel qu'illustré à la figure 6, le support 14 de l'ailette 15 peut comprendre deux parties longitudinales adjacentes et symétriques 14a, 14b. Chaque partie de support 14a, 14b peut être située à proximité de la base d'une aube 1 de l'ensemble. Ainsi, la partie 14a est destinée à être située du côté de l'extrados de l'aube 1 disposée du côté de la partie 14a, tandis que la partie 14b est destinée à être située du côté de l'intrados de l'aube 1' adjacente disposée du côté de la partie 14b. Chaque partie 14a, 14b est ainsi configurée pour entourer la moitié d'une aube adjacente 1, 1'. En particulier, chaque partie 14a, 14b épouse le contour de la moitié d'une plateforme 9 d'une aube adjacente. La partie 14a comprend ainsi une portion longitudinale 14a1 qui entoure la bordure longitudinale 11B de la plateforme 9 de l'aube adjacente 1', ainsi que deux portions transversales 14a2 qui entourent chacune une bordure transversale 10A, 10B de la plateforme 9 de l'aube adjacente 1' et qui sont positionnées entre la bordure transversale 10A, 10B et une virole interne du carter inter-veine de la turbomachine. De la même manière, la partie 14b comprend une portion longitudinale 14b1 qui entoure la bordure longitudinale 11A de la plateforme 9 de l'aube adjacente 1, ainsi que deux portions transversales 14b2 qui entourent chacune une bordure transversale 10A, 10B de la plateforme 9 de l'aube adjacente 1 et qui sont positionnées entre la bordure transversale 10A, 10B et une virole interne du carter inter-veine de la turbomachine.

De façon générale, le support plan 14 du joint inter-plateforme 12 peut être d'une forme générale en I, c'est-à-dire qu'il comprend deux portions terminales s'étendant transversalement à l'axe longitudinale X et une portion centrale s'étendant longitudinalement et sensiblement parallèle à l'axe X. Les portions terminales ont sensiblement les mêmes dimensions entre elles. La portion centrale ayant une largeur moyenne inférieure à la largeur des portions terminales. Chaque portion terminale d'un support de joint est en contact avec une autre portion terminale d'un autre support adjacent d'un autre joint de l'élément de stator. Par exemple, la portion transversale 14a2 d'un support de joint est en contact avec la portion transversale 14b2 d'un support de joint adjacent. Par ailleurs, chaque partie longitudinale 14a, 14b du support peut avoir une forme générale en L dont une partie axiale qui est formée notamment des portions longitudinales 14a1, 14b1 et transversales 14a2, 14ba, et une partie radiale 14c s'étendant vers l'intérieur du support. Cette partie radiale 14c du support est en contact avec la plateforme 9. La partie radiale 14c peut comprendre une première partie radiale 14c1 qui s'étendant radialement et vers l'intérieur depuis la portion longitudinale 14a1, 14b1. De même, la partie 14c peut comprendre une seconde partie radiale 14c2 qui s'étend radialement et vers l'intérieur depuis la ou les portions transversales 14a2, 14b2. Cette configuration particulière du support plan 14 du joint 12 permet de recouvrir de façon étanche les zones de jonction entre les plateformes des aubes adjacentes, tout en garantissant une surface optimale et sensiblement uniforme autour des aubes adjacentes pour un écoulement aérodynamique des flux secondaires. Par ailleurs, il également possible d'assembler facilement ce joint 12 au-dessus et entre deux plateformes 9 de deux aubes adjacentes 1, 1', sans compromettre l'étanchéité de l'élément de stator. Cette portion centrale comprend donc les portions longitudinales 14a1 et 14b1 et les portions terminales comprennent les portions transversales, 14a2, 14b2. Une ailette 15 peut être portée au moins en partie sur des surfaces supérieures de ces portions longitudinales.

L'ailette 15 peut comprendre un bord d'attaque BA situé sur une première partie de support 14a, par exemple la partie de support 14a située du côté de l'aube 1 adjacente dont l'extrados est située du côté de l'ailette 15, et un bord de fuite BF située sur l'autre partie de support 14b. Cette géométrie particulière des ailettes sensiblement similaire à la forme de l'aube et positionné entre des aubes adjacentes, permet guider l'écoulement du flux secondaire et faire barrière à la ligne de courant de remonter sur l'extrados des aubes. Par ailleurs, cette géométrie particulière de l'ailette peut aussi permettre de limiter les effets de distorsion de pression statique pouvant être engendrés au sein de l'écoulement du flux secondaire à proximité des aubes.

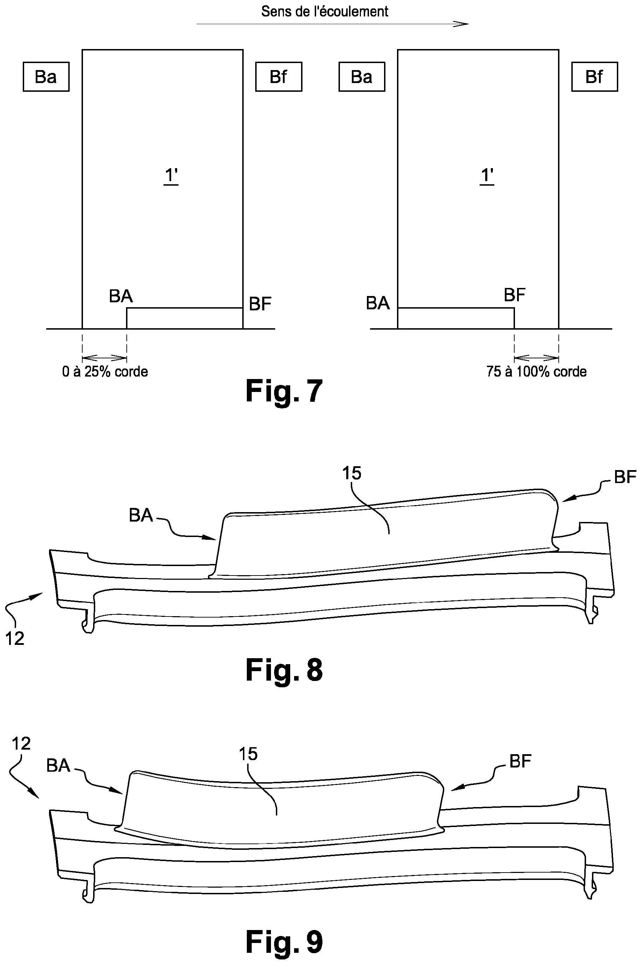

Tel qu'illustré aux figures 7 à 9, le bord d'attaque BA de l'ailette 15 peut être situé longitudinalement à une position comprise entre 0% et 25% de la corde (ou ligne de corde) reliant le bord d'attaque Ba d'une aube adjacente au bord de fuite Bf de l'aube.

Ainsi, le bord d'attaque BA de l'ailette 15 peut se situer entre deux positions extrêmes. Dans une première position d'extrémité (schéma de gauche de la figure 7 et figure 8), le bord d'attaque BA de l'ailette 15 est situé à une position égale 25% de la corde de l'aube, c'est-à-dire qu'il y a entre le bord d'attaque Ba de l'aube et le bord d'attaque BA de l'ailette un espacement égal à 25% de la longueur de la corde, le bord de fuite BF de l'ailette 15 coïncidant longitudinalement avec le bord de fuite Bf de l'aube. Dans cette première position d'extrémité, l'ailette 15 n'est pas assujettie aux problèmes potentiels de sur-incidence de l'écoulement amont car son bord d'attaque BA est reculé par rapport au bord d'attaque Ba de l'aube. Cette disposition permet de réhomogénéiser l'angle en sortie de l'aube de manière très efficace. L'écoulement en sortie de l'aube est redressé, améliorant ainsi les performances du canal secondaire en minimisant les pertes de charge.

Dans une deuxième position d'extrémité (schéma de droite de la figure 7 et figure 9), le bord d'attaque BA de l'ailette 15 est situé à une position égale 0% de la corde de l'aube, c'est-à-dire que le bord d'attaque Ba de l'aube et le bord d'attaque BA de l'ailette coïncident longitudinalement, et il y a entre le bord de fuite BF de l'ailette et le bord de fuite Bf de l'aube un espacement égal à 25% de la longueur de la corde. Cette deuxième position d'extrémité permet de limiter plus précocement le développement du tourbillon au passage du moyeu.

Tel qu'illustré à la figure 7, la longueur de la corde de l'ailette 15 est égale à 75% de la longueur de la corde de l'aube. La corde de l'ailette 15 est la droite reliant le bord d'attaque BA de l'ailette 15 au bord de fuite BF de l'ailette 15. On peut également envisager que la longueur de la corde de l'ailette soit comprise entre 75% et 100% de la longueur de la corde de l'aube. La hauteur de l'ailette 15 peut quant à elle être inférieure à 10% de l'étendue radiale de la veine secondaire. Plus particulièrement, cette hauteur de l'ailette 15 peut être comprise entre 3% et 5% de la hauteur de la veine secondaire. L'épaisseur maximale de l'ailette 15 est avantageusement comprise entre 0.5 et 0.7 fois l'épaisseur maximale de l'aube, de manière à assurer une tenue mécanique suffisante sans trop obstruer le canal. Concernant le positionnement latéral (azimutal) de l'ailette 15, la distance entre l'ailette 15 et une aube adjacente à l'ailette 15 peut être comprise entre 30% et 70% du pas inter-aubes (i.e. la distance entre deux aubes adjacentes), la position de l'ailette 15 pour une distance égale à 50% du pas étant la position en milieu de canal.

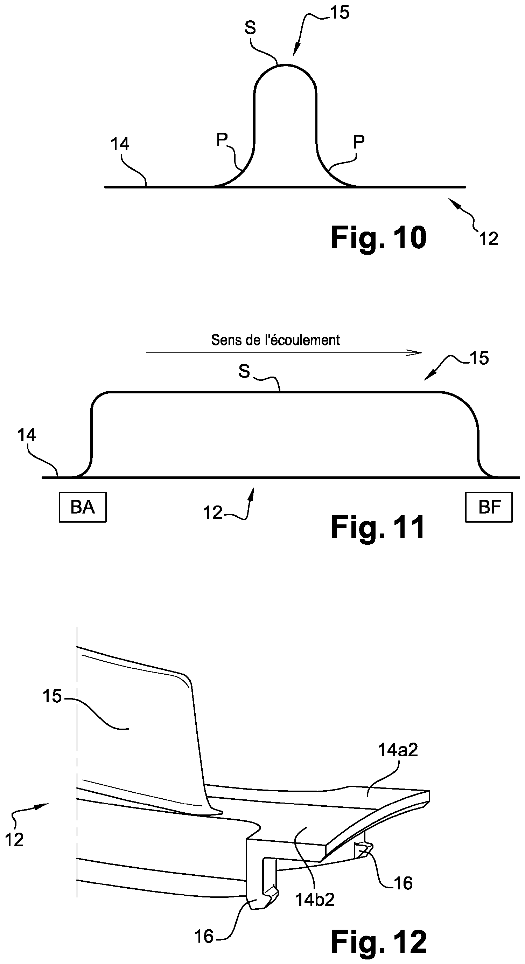

Tel qu'illustrée en coupe transversale à la figure 10, l'ailette 15 peut comprendre un sommet S de forme arrondie, appelé saumon. En supprimant les arêtes vives du sommet S de l'ailette 15, le tourbillon de jeu et le sillage de l'ailette 15 sont atténués. De la même façon, les pieds P de l'ailette 15 peuvent être de section courbe. Les pieds P de l'ailette 15 étant sur-épaissies par rapport au sommet S de l'ailette.

Tel qu'illustrée en coupe longitudinale à la figure 11, la zone de raccordement entre le bord d'attaque BA de l'ailette 15 et le saumon S est courbe. Le rayon de courbure est avantageusement de l'ordre de 2 mm. De la même façon, la zone de raccordement entre le saumon et le bord de fuite BF de l'ailette 15 et le saumon S est courbe, et son rayon de courbure est avantageusement de l'ordre de 4 mm. Cette configuration arrondie permet également d'atténuer le tourbillon de jeu et le sillage de l'ailette 15.

Les lois géométriques des aubes de stator 1 sont avantageusement utilisées pour la construction géométrique des ailettes 15. Ainsi, les angles de squelette de l'ailette peuvent être identique aux angles de squelette des aubes de stator. Par angle de squelette, on entend l'angle formé entre la tangente à chaque point du squelette de l'aube avec l'axe moteur

Une aube de turbomachine comprenant une pluralité de sections d'aubes empilées selon un axe radial, chaque section d'aube s'étendant selon un axe longitudinal entre un bord d'attaque et un bord de fuite, et selon un axe tangentiel entre une face intrados et une face extrados, les sections d'aubes sont réparties selon des lois de répartition longitudinale Xg et tangentielle Yg définissant le positionnement de leurs centre de gravité respectifs par rapport auxdits axes longitudinal et tangentiel selon la hauteur de l'aube s'étendant du pied de l'aube jusqu'à sa tête. Les lois de répartition longitudinale Xg et tangentielle Yg de l'ailette 15 sont avantageusement identiques aux lois lois de répartition longitudinale Xg et tangentielle Yg des aubes de stator. De même, la loi épaisseur/corde de l'ailette est avantageusement identique à la loi épaisseur/corde des aubes de stator.

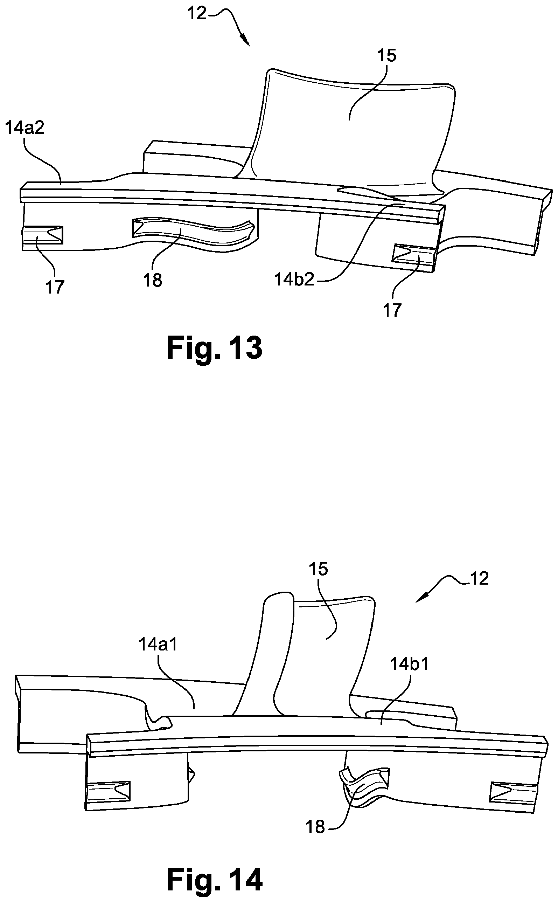

Le joint inter-plateforme peut comprendre des moyens d'accrochage sur des portions saillantes correspondantes de viroles de carter. Tel qu'illustré à la figure 12, des clips 16 peuvent être positionnés à l'aval, sous le support 14 du joint inter-plateforme 12, au niveau des portions transversales aval 14a2, 14b2 du joint 12. De la même façon, des clips 17 peuvent être positionnés à l'amont, sous le support 14 du joint inter-plateforme 12, au niveau des portions transversales amont 14a2, 14b2 du joint 12 (figure 13). En particulier, les clips 16, 17 sont disposés sur la seconde partie radiale 14c2 du support. Des clips latéraux 18 peuvent en outre être positionnés latéralement, sur des faces internes du support 14 du joint inter-plateforme 12, au niveau des portions longitudinales 14a1, 14b1 du joint 12 (figures 13 et 14). En particulier, les clips 18 sont disposés sur la première partie radiale 14c1 du support.

## Revendications

1. Elément de stator de turbomachine (50), s'étendant autour d'un axe longitudinal (X), l'élément comprenant au moins une première aube de stator (1) et au moins une deuxième aube de stator (1'), adjacente circonférentiellement à la première aube de stator (1), chaque première et deuxième aube de stator (1, 1') comprenant une plateforme (9) et une pale (2) s'étendant radialement depuis la plateforme (9), l'élément de stator comprenant également au moins un joint inter-plateforme (12), disposé entre la plateforme (9) de la première aube de stator (1) et la plateforme (9) de la deuxième aube de stator (1'), **caractérisé en ce que** le joint inter-plateforme (12) comprend un support plan (14) muni d'une surface supérieure sur laquelle s'étend une ailette (15), et **en ce que** le support (14) du joint inter-plateforme (12) comprend deux parties longitudinales adjacentes (14a, 14b), chaque partie (14a, 14b) épousant le contour de la moitié d'une plateforme (9) d'une aube adjacente (1, 1').

2. Elément de stator selon la revendication 1, **caractérisé en ce que** l'ailette (15) est allongée selon une direction sensiblement parallèle à l'axe longitudinal (X).

3. Elément de stator selon la revendication 1 ou 2, **caractérisé en ce que** l'ailette (15) présente la même courbure que l'aube de stator (1') dont l'extrados est située du côté de l'ailette (15).

4. Elément de stator selon l'une des revendications 1 à 3, **caractérisé en ce que** le bord d'attaque (BA) de l'ailette (15) est situé longitudinalement à une position comprise entre 0% et 25% de la corde reliant le bord d'attaque (Ba) d'une aube de stator (1, 1') au bord de fuite (Bf) de l'aube (1, 1').

5. Elément de stator selon l'une des revendications 1 à 4, **caractérisé en ce que** la longueur de la corde de l'ailette (15) est comprise entre 75% et 100% de la longueur de la corde d'une aube de stator (1, 1').

6. Elément de stator selon l'une des revendications 1 à 5, **caractérisé en ce que** l'épaisseur maximale de l'ailette (15) est comprise entre 0.5 et 0.7 fois l'épaisseur maximale d'une aube de stator (1, 1').

7. Elément de stator selon l'une des revendications 1 à 6, **caractérisé en ce que** la distance entre l'ailette (15) et une aube adjacente (1, 1') à l'ailette (15) est comprise entre 30% et 70% de la distance entre les deux aubes adjacentes (1, 1').

8. Elément de stator selon l'une des revendications 1 à 7, **caractérisé en ce que** l'ailette (15) comprend en coupe transversale un sommet (S) de forme arrondie.

9. Elément de stator selon la revendication 8, **caractérisé en ce que** la zone de raccordement entre le bord de fuite (BF) et/ou le bord d'attaque (BA) de l'ailette 15 et le sommet (S) est de section longitudinale courbe.

10. Elément de stator selon l'une des revendications 1 à 9, **caractérisé en ce que** la zone de raccordement (P) entre la partie inférieure de l'ailette (15) et la surface supérieure du support plan (14) du joint (12) présente une section transversale courbe.

11. Elément de stator selon l'une des revendications 1 à 10, **caractérisé en ce que** la hauteur radiale de l'ailette (15) est comprise entre 3% et 5% de la hauteur radiale maximale d'une veine annulaire secondaire (V2) de turbomachine dans laquelle est disposée les aubes de stator (1, 1').

12. Turbomachine, **caractérisée en ce qu'**elle comprend au moins un élément de stator selon l'une des revendications 1 à 11.

## Patentansprüche

1. Turbomaschinenstatorelement (50), das sich um eine Längsachse (X) erstreckt, wobei das Element mindestens eine erste Statorschaufel (1) und mindestens eine an die erste Statorschaufel (1) umfänglich angrenzende, zweite Statorschaufel (1') umfasst, wobei jede erste und zweite Statorschaufel (1, 1') eine Plattform (9) und einen Fuß (2), der sich radial von der Plattform (9) erstreckt, umfasst, wobei das Statorelement ebenfalls mindestens eine Zwischenplattformdichtung (12) umfasst, die zwischen der Plattform (9) der ersten Statorschaufel (1) und der Plattform (9) der zweiten Statorschaufel (1') angeordnet ist, **dadurch gekennzeichnet, dass** die Zwischenplattformdichtung (12) eine ebene Stütze (14) umfasst, die mit einer oberen Fläche ausgestattet ist, auf der sich eine Rippe (15) erstreckt, und dadurch, dass die Stütze (14) der Zwischenplattformdichtung (12) zwei angrenzende längslaufende Abschnitte (14a, 14b) umfasst, wobei sich jeder Abschnitt (14a, 14b) der Kontur der Hälfte einer Plattform (9) einer angrenzenden Schaufel (1, 1') anpasst.

2. Statorelement nach Anspruch 1, **dadurch gekennzeichnet, dass** der Rippe (15) entlang einer zur Längsachse (X) im Wesentlichen parallelen Richtung verlängert ist.

3. Statorelement nach Anspruch 1 oder 2, **dadurch gekennzeichnet, dass** der Rippe (15) die gleiche Krümmung wie die Statorschaufel (1') aufweist, deren Bogenrücken sich auf der Seite der Rippe (15) befindet.

4. Statorelement nach einem der Ansprüche 1 bis 3, **dadurch gekennzeichnet, dass** sich die Angriffskante (BA) der Rippe (15) longitudinal in einer Position befindet, die zwischen 0% und 25% der Sehne beträgt, die die Angriffskante (Ba) einer Statorschaufel (1, 1') mit der Hinterkante (Bf) der Schaufel (1, 1') verbindet.

5. Statorelement nach einem der Ansprüche 1 bis 4, **dadurch gekennzeichnet, dass** die Länge der Sehne der Rippe (15) zwischen 75% und 100% der Länge der Sehne einer Statorschaufel (1, 1') beträgt.

6. Statorelement nach einem der Ansprüche 1 bis 5, **dadurch gekennzeichnet, dass** die maximale Dicke der Rippe (15) zwischen dem 0,5- und 0,7-Fachen der maximalen Dicke einer Statorschaufel (1, 1') beträgt.

7. Statorelement nach einem der Ansprüche 1 bis 6, **dadurch gekennzeichnet, dass** der Abstand zwischen der Rippe (15) und einer der Rippe (15) angrenzenden Schaufel (1, 1') zwischen 30% und 70% des Abstands zwischen den zwei angrenzenden Schaufeln (1, 1') beträgt.

8. Statorelement nach einem der Ansprüche 1 bis 7, **dadurch gekennzeichnet, dass** der Rippe (15) im Querschnitt einen Scheitelpunkt (S) mit gerundeter Form umfasst.

9. Statorelement nach Anspruch 8, **dadurch gekennzeichnet, dass** der Anschlussbereich zwischen der Hinterkante (BF) und/oder der Angriffskante (BA) der Rippe 15 und dem Scheitelpunkt (S) von gekrümmtem Längsschnitt ist.

10. Statorelement nach einem der Ansprüche 1 bis 9, **dadurch gekennzeichnet, dass** der Anschlussbereich (P) zwischen dem unteren Teil der Rippe (15) und der oberen Fläche der ebenen Stütze (14) der Dichtung (12) einen gekrümmten Querschnitt aufweist.

11. Statorelement nach einem der Ansprüche 1 bis 10, **dadurch gekennzeichnet, dass** die radiale Höhe der Rippe (15) zwischen 3% und 5% der maximalen radialen Höhe eines sekundären ringförmigen Kanals (V2) der Turbomaschine beträgt, in dem die Statorschaufeln (1, 1') angeordnet sind.

12. Turbomaschine, **dadurch gekennzeichnet, dass** sie mindestens eine Statorelement nach einem der Ansprüche 1 bis 11 umfasst.

## Claims

1. A stator element of a turbomachine (50), extending around a longitudinal axis (X), the element comprising at least one first stator vane (1) and at least one second stator vane (1'), circumferentially adjacent to the first stator vane (1), each first and second stator vanes (1, 1') comprising a platform (9) and a blade (2) extending radially from the platform (9), the stator element also comprising at least one inter-platform seal (12), arranged between the platform (9) of the first stator vane (1) and the platform (9) of the second stator vane (1'), **characterized in that** the inter-platform seal (12) comprises a flat support (14) provided with an upper surface on which a fin (15) extends, and **in that** the support (14) of the inter-platform seal (12) comprises two adjacent longitudinal parts (14a, 14b), each part (14a, 14b) conforming to the contour of one half of a platform (9) of an adjacent vane (1,1').

2. The stator element according to claim 1, **characterized in that** the fin (15) is elongated in a direction substantially parallel to the longitudinal axis (X).

3. The stator element according to claim 1 or 2, **characterized in that** the fin (15) has the same curvature as the stator vane (1'), the suction side of which is located on the side of the fin (15).

4. The stator element according to one of claims 1 to 3, **characterized in that** the leading edge (BA) of the fin (15) is located longitudinally at a position between 0% and 25% of the chord connecting the leading edge (Ba) of a stator vane (1, 1') to the trailing edge (Bf) of the vane (1, 1').

5. The stator element according to one of claims 1 to 4, **characterized in that** the length of the chord of the fin (15) is between 75% and 100% of the length of the chord of a stator vane (1, 1').

6. The stator element according to one of claims 1 to 5, **characterized in that** the maximum thickness of the fin (15) is between 0.5 and 0.7 times the maximum thickness of a stator vane (1, 1').

7. The stator element according to one of claims 1 to 6, **characterized in that** the distance between the fin (15) and a vane (1, 1') adjacent to the fin (15) is between 30% and 70% of the distance between the two adjacent vanes (1, 1').

8. The stator element according to one of claims 1 to 7, **characterized in that** the fin (15) comprises in cross section a top (S) with a rounded shape.

9. The stator element according to claim 8, **characterized in that** the connecting zone between the trailing edge (BF) and/or leading edge (BA) of the fin (15) and the top (S) has a curved longitudinal section.

10. The stator element according to one of claims 1 to 9, **characterized in that** the connecting zone (P) between the lower part of the fin (15) and the upper surface of the flat support (14) of the seal (12) has a curved cross-section.

11. The stator element according to one of claims 1 to 10, **characterized in that** the radial height of the fin (15) is between 3% and 5% of the maximum radial height of a secondary annular duct (V2) of a turbomachine in which the stator vanes (1, 1') are arranged.

12. A turbomachine, **characterized in that** it comprises at least one stator element according to one of claims 1 to 11.
